# EUROPEAN PATENT APPLICATION

(11) **EP 2 421 254 A2**
(43) Date of publication of application: **22.02.2012**
(21) Application number: 11153589.4
(22) Date of filing: 07.02.2011
(51) Int. Cl.: H04N 5/45

(54) **Display apparatus and control method thereof.**

(30) Priority: 19.08.2010 KR 20100080381
(71) Applicant: Samsung Electronics Co., Ltd., Suwon-si, Gyeonggi-do 442-742 (KR)
(72) Inventor: Moon, Ji-bum, Seoul (KR); Kwon, Heui-jin, Gyeonggi-do (KR); Choi, Yoo-jin, Seoul (KR); Hwang, Woo-seok, Seoul (KR)
(74) Representative: Brandon, Paul Laurence

(57) **Abstract**

A display apparatus includes an image processor which processes an image to display an image content; a display unit which displays thereon an image content that is processed by the image processor; and a controller which displays a user interface (UI) menu including a plurality of UI items to search the image content, as one of a two-dimensional (2D) layout by which the plurality of UI items are arranged in a 2D manner, and a three-dimensional (3D) layout by which the plurality of UI items are arranged in a 3D manner , and changes displaying the one of the layouts to display the other of the layouts according to a user's command while maintaining a continuity of the arrangement of the plurality of UI items. Accordingly, search for an image content can be efficiently performed by using a UI menu.

## Description

### BACKGROUND

### 1. Field

Apparatuses and methods consistent with the exemplary embodiments relate to a display apparatus and a control method thereof, and more particularly, to a display apparatus and a control method thereof which displays a user interface (UI) menu including a plurality of UI items to search image contents.

### 2. Description of the Related Art

A display apparatus, such as a TV, displays thereon an image based on a broadcasting signal received from a broadcasting station or an image signal from an image device such as a digital versatile disc (DVD) (hereinafter, to be called "image signal" collectively).

The image signal may include a broadcasting content, a movie content and other various image contents, and a display apparatus provides a UI menu for a user to conveniently search a desired content among the foregoing image contents.

As technology progresses, more and more image contents can be viewed from the display apparatus, and many technologies have been proposed to easily search numerous image contents, but still a convenient and useful UI menu has been difficult to attain.

A conventional display apparatus displays a two-dimensional UI menu (hereinafter, to be called "2D layout") or a three-dimensional UI menu (hereinafter, to be called "3D layout"). In the case of the 2D layout, displaying information is efficient, and an information system is expressed clearly. However, a user needs to manipulate the display apparatus repetitively to search increasingly large amounts of information, and the user's interaction with the display apparatus becomes complicated in searching a large amount of information that is continuously growing.

In the case of the 3D layout, a larger amount of space can be expressed than that which can be currently viewed, and a user may perform an intuitive and simple manipulation to view the space which is not currently viewed. However, more visible space is needed to express the space which is not currently viewed, i.e., some of the visible space must be used for purposes other than the information transmission, and moreover, the overall information system is not expressed clearly.

As above, the 2D layout or the 3D layout of the conventional display apparatus does not fully express the UI menu.

### SUMMARY

Accordingly, one or more exemplary embodiments provide a display apparatus and a control method thereof which expresses a user interface (UI) menu by a more efficient layout to search an image content.

An aspect of an exemplary embodiment provides a display apparatus including: an image processor which processes an image to display an image content; a display unit which displays thereon an image content that is processed by the image processor; and a controller which displays a user interface (UI) menu including a plurality of UI items to search the image content, as one of a two-dimensional (2D) layout by which the plurality of UI items is arranged in a 2D manner, and a three-dimensional (3D) layout by which the plurality of UI items is expressed in a 3D manner while maintaining a continuity of the arrangement of the plurality of UI items in the 2D layout, and changes one of the layout that is displayed currently to another layout according to a user's command, and displays the UI menu in the changed layout.

The controller may display the UI menu as an intermediate layout which is an interim state of changing between the 2D layout and the 3D layout.

The controller may display a change process of the UI menu between the 2D layout and the 3D layout as an animation by using a plurality of image frames.

The 3D layout may include a polyhedron having the plurality of UI items as facets, and the corresponding 2D layout may include a development figure of the polyhedron.

The 2D layout may be provided as a matrix of the plurality of UI items, and the corresponding 3D layout may be provided in a 3D manner for the plurality of UI items in a predetermined direction centering on one of the plurality of UI items.

A focused UI item in one of the 2D layout and the 3D layout may be maintained as focused in another layout even after the 2D layout and the 3D layout are changed to each other.

The plurality of UI items may rotate or move to display the focused UI item following an initial screen of the 3D layout when the 2D layout is changed to the 3D layout.

The display apparatus may further include a signal receiver which receives a broadcasting signal, and the image processor may process an image content obtained from the broadcasting signal.

An aspect of another exemplary embodiment provides a control method of a display apparatus which processes and displays an image content, the control method including: displaying a UI menu including a plurality of UI items to search an image content, as one of a 2D layout by which the plurality of UI items is arranged in a 2D manner, and a 3D layout by which the plurality of UI items is arranged in a 3D manner while maintaining a continuity of the arrangement of the plurality of UI items in the 2D layout; and changing the UI menu of a currently displayed layout to another layout and displaying the UI menu in the changed layout according to a user's command.

The changing and displaying the UI menu may include displaying the UI menu as an intermediate layout which is an interim state of changing between the 2D layout and the 3D layout.

The displaying the UI menu as the intermediate layout may include displaying the change process between the 2D layout and the 3D layout as an animation by using a plurality of image frames.

The 3D layout may include a polyhedron having the plurality of UI items as facets, and the corresponding 2D layout may include a development figure of the polyhedron.

The 2D layout may be provided as a matrix of the plurality of UI items, and the corresponding 3D layout may be provided in a 3D manner for the plurality of UI items in a predetermined direction centering on one of the plurality of UI items.

A focused UI item in one of the 2D layout and the 3D layout may be maintained as focused in another layout even after the 2D layout and the 3D layout are changed to each other.

The changing and displaying the other layout may include displaying an initial screen of the 3D layout when the 2D layout is changed to the 3D layout; and rotating or moving the plurality of UI items to display the focused UI item.

An aspect of another exemplary embodiment provides a control method of a display apparatus, the method including: displaying a plurality of UI items in one of a 2D layout in which the plurality of UI items are arranged along two dimensions, and a 3D layout in which the plurality of UI items are arranged along three dimensions; receiving a command by a user; and changing the displaying of the plurality of UI items from the one of the 2D layout and the 3D layout to display another of the 2D layout and the 3D layout according to the command by the user, wherein the plurality of UI items are arranged adjacent to same respective ones of the UI items in the 2D layout as in the 3D layout.

The displaying the plurality of UI items in the 3D layout may include displaying the UI items as a plurality of facets of a polyhedron; and the displaying the plurality of UI items in the 2D layout may include displaying the UI items as a plurality of segments of a net of the polyhedron, the plurality of segments corresponding to the plurality of facets.

The control method may further include receiving a broadcasting signal; processing an image content obtained from the broadcasting signal; and displaying the processed image content.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates a display apparatus according to an exemplary embodiment;
FIG. 2 is a block diagram of the display apparatus in FIG. 1;
FIGS. 3 and 4 illustrate an example of a UI menu that is displayed by the display apparatus in FIGS. 1 and 2; and
FIG. 5 is a flowchart of a control method of the display apparatus according to the exemplary embodiment of the present invention.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

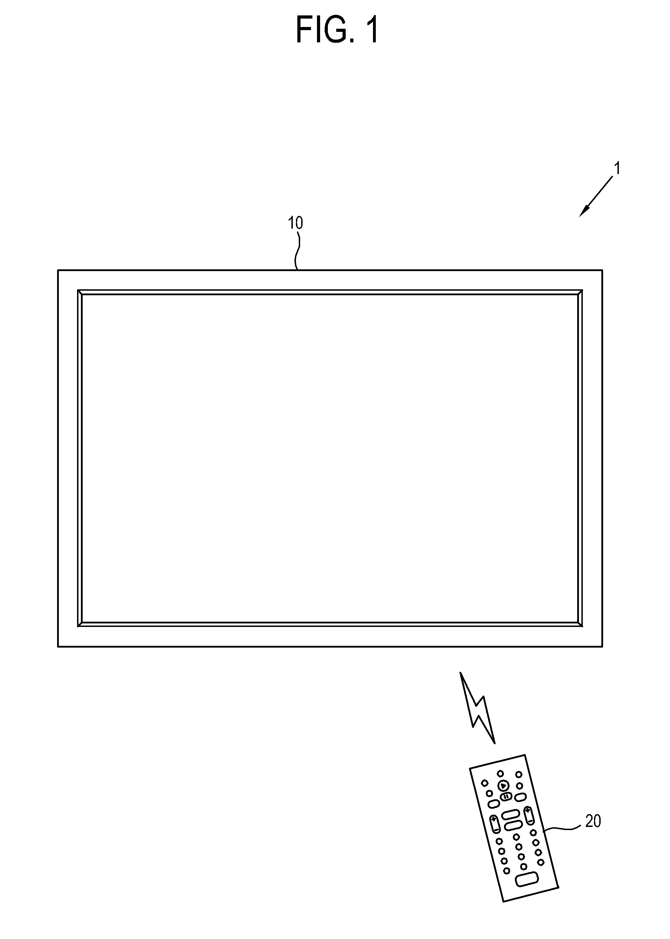

FIG. 1 illustrates a display apparatus 1 according to an exemplary embodiment. The display apparatus 1 may include a TV. The display apparatus 1 includes a display main body 10 to display an image, and a user input unit 20 to control the display main body 10 according to a user's manipulation. The user input unit 20 may include a remote controller that is separated from the display main body 10. The user input unit 20 transmits a remote control signal to the display main body 10 according to a user's manipulation, and the display main body 10 receives the remote control signal from the user input unit 20 and performs a corresponding operation.

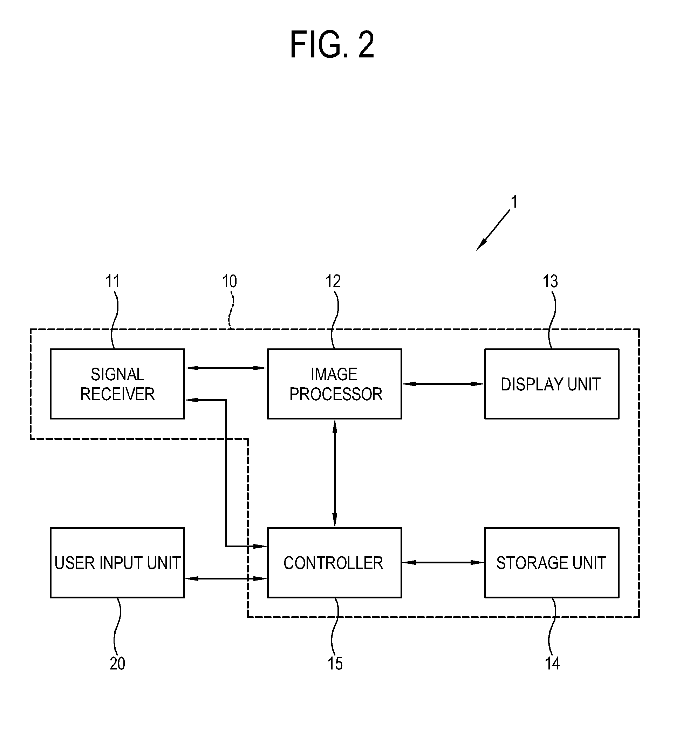

FIG. 2 is a block diagram of the display apparatus 1 in FIG. 1. The display main body 10 includes a signal receiver 11, an image processor 12, a display unit 13, a storage unit 14 and a controller 15.

The signal receiver 11 receives an image signal including an image content. The image signal may further include an audio content, data content, or both audio and data content, as well as the image content. An image signal which is received by the signal receiver 11 includes a broadcasting signal transmitted by a broadcasting station, and a signal input from a predetermined image device. In the case of the broadcasting signal, the signal receiver 11 may selectively receive a broadcasting signal from one of a plurality of channels. The broadcasting signal includes, for example, an airwave broadcasting, a cable broadcasting, a satellite broadcasting and other known broadcasting signals. The type of the broadcasting signal includes a digital broadcasting and an analog broadcasting. The signal receiver 11 may process the received broadcasting signal to obtain an image content therefrom. The signal processing includes tuning, analog to digital conversion, demodulation and digital to analog conversion.

In the case of an image signal input by an image device, the signal receiver 11 may communicate with the image device transmitting the image signal, corresponding to a property of the input image signal. Such communication includes wired and wireless communications, and analog and digital communications. The communication method includes all types of communications that are known to be used to transmit the image content. The image device which supplies an image signal to the signal receiver 11 is not limited in type, and includes a digital versatile disc (DVD) player, a blue-ray disc (BD) player, a PC, a mobile phone, a smartphone and other TVs. The signal receiver 11 may process the input image signal to obtain an image content therefrom. The processing may include an analog to digital conversion and a digital to analog conversion.

Further, the signal receiver 11 may receive an image signal from a predetermined server through a network or an image signal from a portable storage device such as a universal serial bus (USB) storage medium. In each of the above cases, the signal receiver 11 may communicate with a counterpart device in a given manner to receive an image signal. In any case, the signal receiver 11 may receive and process the image signal according to a control of the controller 15.

The image processor 12 processes an image content that is obtained from the image signal received by the signal receiver 11 to display the image content. The image processing includes demultiplexing, decoding and scaling an image, and adjusting and improving a picture quality. The image processor 12 may process an image relating to a UI menu for an interface with a user. The image processor 12 may overlap at least a part of an image of the image content and an image relating to the UI menu or arrange the image contents side by side.

The display unit 13 displays thereon an image processed by the image processor 12. The method of displaying the image by the display unit 13 is not limited, and includes all of known display methods. The display unit 13 may include a liquid crystal display (LCD) panel, an organic light emitting diode (OLED) panel, a plasma display panel (PDP), a projection or a cathode ray tube (CRT).

The storage unit 14 stores therein data used for an operation of the display main body 10. The storage unit 14 includes all types of non-volatile memories which are known to store data therein semi-permanently. The non-volatile memory may include, e.g., an electrically erasable programmable read-only memory (EEPROM), a flash memory and a hard disc drive.

If the user input unit 20 includes a remote controller, the display main body 10 may further include a remote control signal receiver (not shown) to receive a remote control signal from the user input unit 20.

The controller 15 controls the display main body 10 as a whole. The controller 15 controls elements of the display main body 10 according to user's input information obtained from the remote control signal received from the user input 20. The controller 15 may control the signal receiver 11 to receive a desired image signal. The controller 15 may control the image processor 12 to process the UI menu and the image content obtained from the image signal received by the signal receiver 11. The controller 15 may store in the storage unit 14 data or read the data stored in the storage unit 14 as necessary for the above control.

The controller 15 may include a non-volatile memory to store therein an execution code of a computer program corresponding to the foregoing control, a volatile memory to load at least a part of the execution code stored in the non-volatile memory, and a microprocessor to execute the execution code loaded to the volatile memory.

The user input unit 20 may include a touch pad and a keypad to detect a user's input, a remote control signal transmitter to transmit a remote control signal corresponding to a detected user's input, and a remote controller to control the foregoing elements.

The display main body 10 may further include other elements (not shown) used for the operation of the display apparatus 1. For example, the display main body 10 may further include an audio signal receiver, an audio signal processor and an audio output unit to receive, process and output an audio signal, respectively, an input pad provided in the display main body 10 separately from the user input unit 20 to receive a user's command, and a power supply unit to supply power to the elements of the display main body 10.

Hereinafter, searching an image content by using the display apparatus 1 according to the exemplary embodiment will be described. An image content which may be searched by the display apparatus 1 includes a broadcasting content, a movie content, a photo, a video, but is not limited thereto. As described above, a content which may be searched by a user by using the display apparatus 1 is not limited to an image content, and may vary. The image content may include an audio content, a data content, or both audio and data content. Hereinafter, all kinds of contents that may be provided by the display apparatus 1 are called "contents" collectively.

It is assumed that the display apparatus 1 according to the exemplary embodiment provides contents through at least one received broadcasting signal of a plurality of channels. Also, the display apparatus 1 may be connected to at least one image device and receive additional contents from the image signal input by the connected image device. Further, the display apparatus 1 may store in the storage unit 14 other contents, and provide the contents stored in the storage unit 14.

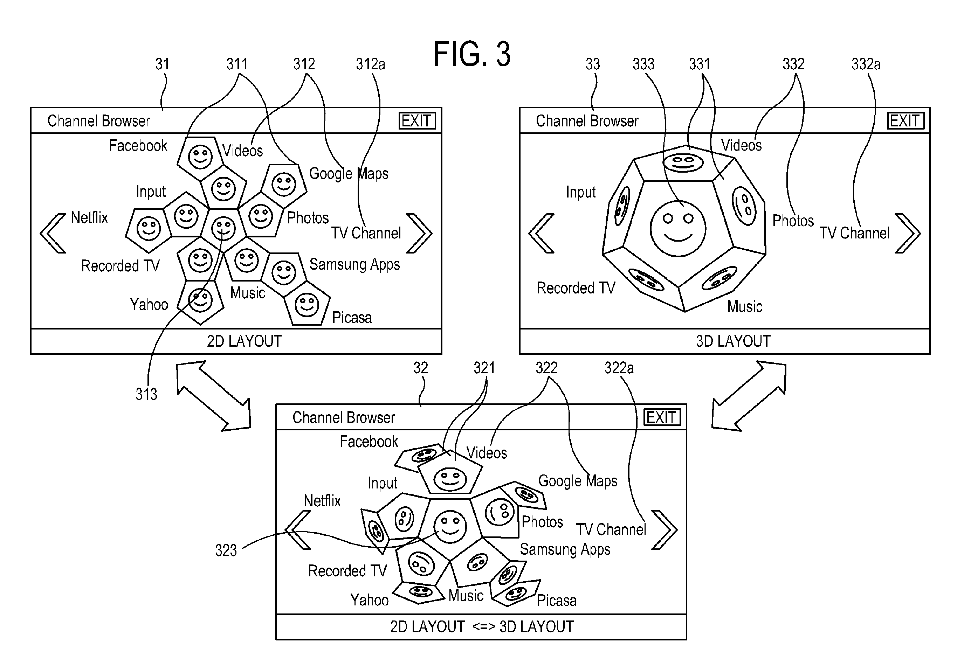

The display apparatus 1 uses the UI menu to conveniently search the contents to be provided through various routes as above. FIG. 3 illustrates an example of a plurality of layouts of a UI menu displayed by the display apparatus 1 in FIGS. 1 and 2. The controller 15 controls the image processor 12 to display the plurality of layouts 31, 32 and 33 on the display unit 13.

As shown therein, each of the layouts 31, 32 and 33 of the UI menu includes a plurality of UI items 311, 321 and 331 corresponding to the plurality of contents to be provided. The plurality of UI items 311, 321 and 331 may display information of the plurality of contents. The information of the contents may include channel names 312, 322 and 332 of the contents, a channel number (not shown) and a title (not shown). The information of the contents may include a thumbnail image of the contents (not shown). Further, the plurality of UI items 311, 321 and 331 express the same image (smiley shape) for convenience, and may further include various images relating to the respective content of each channel.

A user may search and select desired contents by using the plurality of UI items 311, 321 and 331. The controller 15 may focus on one of the plurality of UI items for a user to select one of the plurality of UI items 311, 321 and 331. For example, as shown in FIG. 3, currently-focused UI items 313, 323 and 333 may be provided in a center of a screen which draws the most attention. Information of the contents for the currently-focused UI items 313, 323 and 333 may be displayed on the screen to be recognized by a user (refer to reference numerals 312a, 322a and 332a in FIG. 3). According to another exemplary embodiment, a currently-focused UI item of the plurality of UI items 311, 321 and 331 may be highlighted to be recognized by a user. The controller 15 may move the focus and display one of the UI items as the currently-focused item 313, 323 and 333 according to a user's command input through the user input unit 20. The controller 15 may select the contents of the currently-focused UI items 313, 323 and 333 when the desired UI items 313, 323 and 333 are highlighted.

The controller 15 according to the present exemplary embodiment displays the UI menu as one of a 2D layout 31 and a 3D layout 33. The 2D layout 31 according to the present exemplary embodiment is provided in a 2D manner for the plurality of UI items 311, and the 3D layout 33 is provided in a 3D manner for the plurality of UI items 331. In particular, the 2D layout 31 and the 3D layout 33 illustrate the plurality of UI items 311 and 331 in a continued arrangement where each of the UI items 311, 331 remain adjacent to at least one of the other UI items 311, 331 throughout switching between the plurality of layouts 31, 32, 33.

The continuity of the arrangement of the plurality of UI items 311 and 331 according to the present exemplary embodiment means that the arrangement of one UI item and another adjacent UI item in the 3D layout 33 is the same as in the 2D layout 31, and vice versa. For example, referring to FIG. 3, the 3D layout 33 illustrates a dodecahedron having the plurality of UI items 331 as facets. The 2D layout 31 illustrates a figure developed, or generated, from the dodecahedron of the 3D layout 33 by using the plurality of UI items 311. For example, as shown in FIG. 3, the 2D image may be a net of the shape formed in the 3D image, i.e., may be the net of the dodecahedron. A net is a two dimensional representation of a three dimensional object, e.g., a two dimensional shape that may be folded on its segments or curved on its boundaries to form a three dimensional figure. In the 2D layout 31 and the 3D layout 33, five UI items (refer to "Input", "Video", etc.) are arranged next to the currently-focused UI items 313 and 333, and the arrangement of the five UI items are the same in the 2D layout 31 and the 3D layout 33. That is, any two adjacent UI items in the 3D layout 33 are also adjacent in the 2D layout 31. As above, the conformity of the arrangement of the plurality of UI items 311 and 331 in the 2D layout 31 and the 3D layout 33 are called "the continuity of the arrangement is maintained."

When the UI menu is changed between the 2D layout 31 and the 3D layout 33, the currently-focused items 313 and 333 among the plurality of UI items 311 and 331 may be maintained before and after the change. Further, immediately before or after the change from the 2D layout 31 or from the 3D layout 33, a basic or initial screen (not shown) of the 2D layout 31 or the 3D layout 33 may be displayed and then the 2D layout 31 or the 3D layout 33 may be moved or rotated to display the currently-focused UI items 313 and 333.

The controller 15 according to the present exemplary embodiment changes the UI menu from the 2D layout 31 to the 3D layout 33 according to a user's command input through the user input unit 20 while displaying the plurality of UI items 311 in the 2D layout 31. Similarly, the controller 15 changes the UI menu from the 3D layout 33 to the 2D layout 31 according to the user' s command input through the user input unit 20 while displaying the plurality of UI items 331 in the 3D layout 33. The continuity of the arrangement of the plurality of UI items 311 and 331 in the 2D layout 31 and the 3D layout 33 is maintained, and a user may conveniently and efficiently search contents. That is, a user may select one of the 2D layout 31 and the 3D layout 33 and easily use a more preferable UI menu depending on the current circumstances, and is guaranteed the flow of the search by the continuity of the arrangement in the 2D layout 31 and the 3D layout 33 when the UI menu is changed between the 2D and 3D layouts 31, 33. Accordingly, any inconvenience which may arise from a cut-off of the flow of the search due to a change to a disconnected layout or from a new search is prevented, and a user convenience and efficiency of search improves.

According to a exemplary embodiment, the controller 15 according to the present exemplary embodiment may display an intermediate layout 32 which is an interim state of the change when the 2D layout 31 is changed to the 3D layout 33 or the 3D layout 33 is changed to the 2D layout 31. More specifically, the controller 15 may change the 2D layout 31 to an intermediate layout 32 and display the intermediate layout 32 according to a user's command input while displaying the 2D layout 31, and thereafter change the intermediate layout 32 to the 3D layout 33, and vice versa.

The intermediate layout 32 according to the present exemplary embodiment refers to an interim state of changing between the 2D layout 31 and the 3D layout 33. Referring to FIG. 3, the intermediate layout 32 may include a temporary state of a dodecahedron having the plurality of UI items 331 as facets before being unfolded to the developed figure of the dodecahedron, i.e., in transition from the 2D layout 31 to the 3D layout 33.

FIG. 3 illustrates only one intermediate layout 32, but the number of the intermediate layout 32 is not limited thereto, and the change process from the 2D layout 31 to the 3D layout 33 and vice versa may be expressed as an animation by using a plurality of image frames. As above, the intermediate layout 32 according to the present exemplary embodiment may be used to express the 2D layout 31 and the 3D layout with more enhanced continuity of the UI menu, and further increases convenience and efficiency of search.

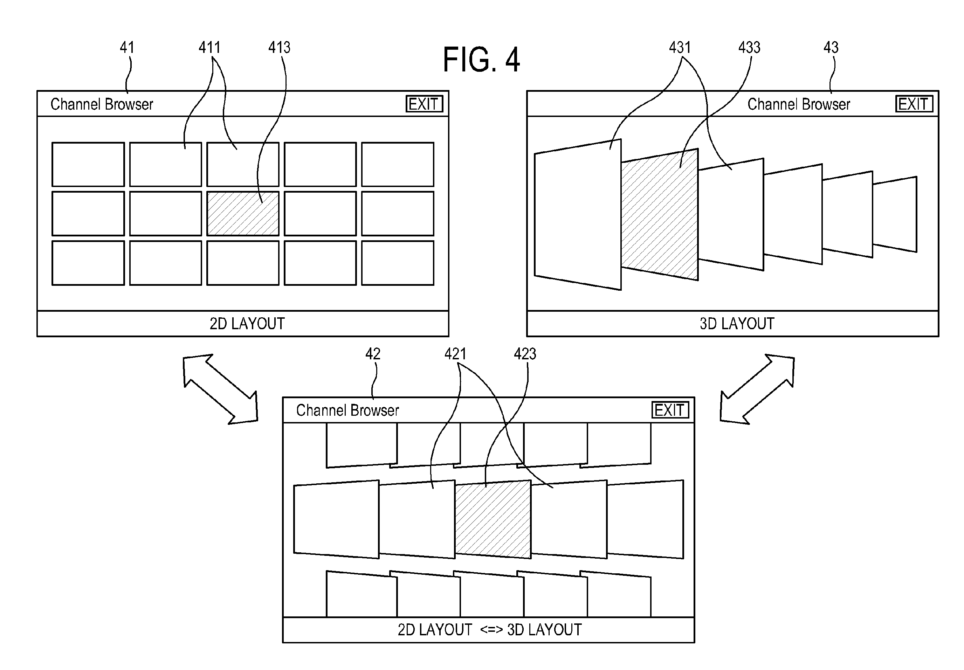

FIG. 3 illustrates the 2D layout 31, the intermediate layout 32 and the 3D layout 33 as a dodecahedron, but the shapes of the 2D layout 31, the intermediate layout 32 and the 3D layout 33 are not limited thereto, and may vary. For example, as shown in FIG. 4, a 2D layout 41 is provided as a matrix of a plurality of UI items 411, and a 3D layout 43 is provided in a 3D manner layering a plurality of UI items 413 along a predetermined direction centering on a UI item 431, and the intermediate layout 42 may express an interim state of changing between the 2D and 3D layouts 41 and 43. Reference numerals 413, 423 and 433 in FIG. 4 refer to currently-focused UI items in each layout. The UI menu in FIG. 4 is the same as that in FIG. 3, and detailed description will be omitted.

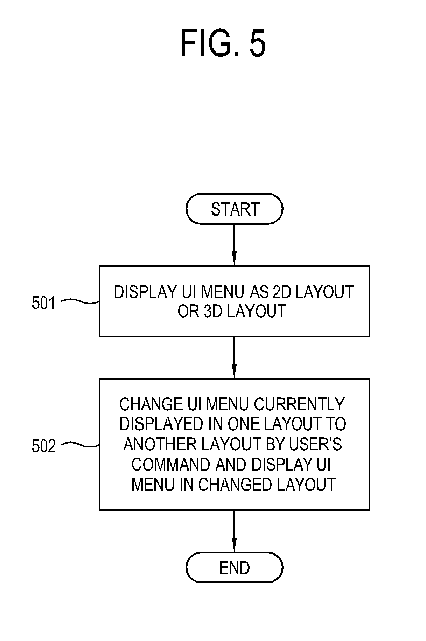

FIG. 5 is a flowchart of a control method of the display apparatus 1 according to the exemplary embodiment. The UI menu is displayed in the 2D layout or in the 3D layout at operation 501. The UI menu of the currently-displayed layout is changed to another layout according to a user's command at operation 502. Other specific operations which may be performed at operations 501 and 502 may be inferred from the property of the display apparatus 1 described with reference to FIGS. 1 to 4, and description will be omitted.

As described above, a display apparatus and a control method thereof according to the present exemplary embodiments expresses a UI menu as a more efficient manner to search an image content.

Although a few exemplary embodiments have been shown and described, it will be appreciated by those skilled in the art that changes may be made in these exemplary embodiments without departing from the principles and spirit of the inventive concept, the scope of which is defined in the appended claims and their equivalents.

## Claims

1. A display apparatus comprising:
an image processor which processes an image to display an image content;
a display unit which displays the image content of the processed image; and
a controller which displays a user interface (UI) menu comprising a plurality of UI items to search the image content, the plurality of UI items being arranging in one of a two-dimensional (2D) layout in which the plurality of UI items are arranged along two dimensions, and a three-dimensional (3D) layout in which the plurality of UI items are arranged along three dimensions, and changes from displaying the one of the 2D layout and the 3D layout to another of the 2D layout and the 3D layout according to a user's command,
wherein the controller maintains a continuity of an arrangement of the plurality of UI items when changing from the displaying the one of the 2D layout and the 3D layout to the other of the 2D layout and the 3D layout.

2. The display apparatus according to claim 1, wherein the controller displays the UI menu in an intermediate layout during the changing from the displaying the one of the 2D layout and the 3D layout to the other of the 3D layout and the 3D layout, the intermediate layout being an interim state between the 2D layout and the 3D layout.

3. The display apparatus according to claim 2, wherein the controller displays the changing from the displaying the one of the 2D layout and the 3D layout to the other of the 2D layout and the 3D as an animation by using a plurality of image frames.

4. The display apparatus according to claim 1, wherein the 3D layout comprises a polyhedron comprising a plurality of facets, the plurality of UI items are represented by the plurality of facets, and the 2D layout comprises a net of the polyhedron.

5. The display apparatus according to claim 1, wherein the 2D layout comprises a matrix of the plurality of UI items, and the 3D layout comprises the plurality of UI items disposed three dimensionally along a predetermined direction.

6. The display apparatus according to claim 1, wherein a focused UI item which is highlighted among the plurality of UI items in the one of the 2D layout and the 3D layout is maintained as highlighted in the other of the 2D layout and the 3D layout.

7. The display apparatus according to claim 6, wherein the controller displays an initial screen of the other of the 2D layout and the 3D layout, and plurality of UI items rotate or move to display the focused UI item of the plurality of UI items following the displaying of the initial screen ut.

8. The display apparatus according to claim 1, further comprising a signal receiver which receives a broadcasting signal, wherein
the image processor processes an image content obtained from the broadcasting signal.

9. A control method of a display apparatus which processes and displays an image content, the control method comprising:
displaying a user interface (UI) menu comprising a plurality of UI items to search the image content, the plurality of UI items being arranged in one of a two-dimensional (2D) layout in which the plurality of UI items are arranged along two dimensions, and a three-dimensional (3D) layout in which the plurality of UI items are arranged along three dimensions; and
changing the displaying of the UI menu from the one of the 2D layout and the 3D layout to another of the 2D layout and the 3D layout according to a user's command, the changing comprising maintaining a continuity of an arrangement of the plurality of UI items when changing from the displaying the one of the 2D layout and the 3D layout to the other of the 2D layout and the 3D layout.

10. The control method according to claim 9, wherein the changing the displaying of the UI menu comprises displaying the UI menu in an intermediate layout during changing from the displaying of the one of the 2D layout and the 3D layout to the other of the 2D layout and the 3D layout, the intermediate layout being an interim state between the 2D layout and the 3D layout.

11. The control method according to claim 10, wherein the changing the displaying of the UI menu comprises displaying the changing from the one of the 2D layout and the 3D layout to the other of the 2D layout and the 3D layout as an animation by using a plurality of image frames.

12. The control method according to claim 9, wherein the 3D layout comprises a polyhedron comprising a plurality of facets, the plurality of UI items represented by the plurality of facets, and the 2D layout comprises a net of the polyhedron.

13. The control method according to claim 9, wherein the 2D layout comprises a matrix of the plurality of UI items, and the 3D layout comprises the plurality of UI items layered three dimensionally along a predetermined direction.

14. The control method according to claim 9, wherein a focused UI item which is highlighted among the plurality of UI items in the one of the 2D layout and the 3D layout is maintained as highlighted in the other of the 2D layout and the 3D layout.

15. The control method according to claim 14, wherein the changing the displaying of the other of the 2D layout and the 3D layout comprises displaying an initial screen of the other of the 2D layout and the 3D layout; and
rotating or moving the plurality of UI items to display the focused UI item after the displaying of the initial screen.
